# EUROPÄISCHE PATENTSCHRIFT

(11) **EP 4 005 924 B1**
(45) Veröffentlichungstag und Bekanntmachung des Hinweises auf die Patenterteilung: **30.08.2023**
(21) Anmeldenummer: 20215646.9
(22) Anmeldetag: 18.12.2020
(51) Int. Cl.: B64D 11/00, B64D 11/06

(54) **VERTIKAL AUFZUSTELLENDES LEICHTBAUTEIL FÜR EINE AUSKRAGENDE LASTAUFNAHME**
LIGHTWEIGHT COMPONENT TO BE SET UP VERTICALLY FOR A CANTILEVERED LOAD RECEIVER
COMPOSANT LÉGER À INSTALLER VERTICALEMENT POUR UNE PRISE DE CHARGE SAILLANTE

(30) Priorität: 30.11.2020 EP 20210837
(43) Veröffentlichungstag der Anmeldung: 01.06.2022
(73) Patentinhaber: Bucher Leichtbau AG, 8117 Fällanden (CH)
(72) Erfinder: SCHERTLER, Michael, 35684 Dillenburg (DE); MÜLLER, Ruxandra, 8152 Glattpark (Opfikon) (CH)
(74) Vertreter: Liebetanz, Michael

(56) Entgegenhaltungen:
- EP-A1- 2 689 918
- EP-A1- 2 832 265
- EP-A1- 3 156 331
- EP-A1- 3 272 643
- US-A1- 2010 060 060

## Beschreibung

### TECHNISCHES GEBIET

Die vorliegende Erfindung betrifft vertikal aufzustellendes Leichtbauteil für eine auskragende Lastaufnahme.

### STAND DER TECHNIK

Die DE 20 2016 125 329 A1 beschreibt eine Trägerstruktur für einen Flugbegleitersitz, wobei die Trägerstruktur Stützelemente aufweist, wobei die Stützelemente an einem oberen und an einem unteren Ende der Trägerstruktur angeordnet sind, wobei die Stützelemente über Befestigungspunkte die Trägerstruktur mit einer Flugzeugstruktur verbinden, wobei die Trägerstruktur für die Aufnahme des Flugbegleitersitzes Aufnahmeelemente aufweist. Dabei weist die Trägerstruktur mindestens zwei im Wesentlichen vertikale Elemente und mindestens ein im Wesentlichen horizontales Element auf, wobei die vertikalen Elemente mindestens ein oberes und ein unteres Ende aufweisen, die Stützelemente an den jeweiligen Enden der vertikalen Elemente angebunden sind und Fachwerkstreben bilden. Dazu sind die Stützelemente dazu ausgelegt, um an mindestens zwei Anbindungspositionen der Flugzeugstruktur verbunden zu werden, wobei mindestens zwei obere und zwei untere Befestigungspunkte in ihrer jeweiligen Anbindungsposition an der Flugzeugstruktur wählbar sind. Das Ziel dieser Trägerstruktur ist das Anbinden mindestens eines Kabinenelement adaptiv an die Trägerstruktur. Die Fig. 2 bzw. 5 der DE 20 2016 125 329 A1 zeigt einen in die Wand integrierten Sitz wobei der Sitz an den vertikalen Elementen der Trägerstruktur angebunden ist.

Die DE 20 2013 108 121 A1 offenbart eine Trennwand zur Integration in eine Fahrzeugkabine eines Verkehrsmittels, welche eine erste Fläche und eine zweite Fläche aufweist, die parallel zueinander angeordnet sind. Die erste Fläche weist mindestens eine Ausnehmung auf, die mit einem korrespondierend dazu ausgestalteten, zumindest bereichsweise flächigen Körper ausfüllbar ist, wobei der Körper über ein Schwenkmittel an dem Körper verschwenkbar angeordnet und in eine Verstauposition und eine Benutzungsposition bringbar ist. Der Körper füllt in seiner Verstauposition die zugehörige Ausnehmung aus. Damit wird eine multifunktionale Trennwand geschaffen, die ohne Beanspruchung zusätzlichen Bauraums den Komfort und das Platzangebot an Bord des Verkehrsmittels deutlich steigern kann. Im Gegenzug wird dagegen die Stabilität der Trennwand geschwächt, da diese Körper aus der Trennwand herausgeklappt werden und damit in der Parkposition den Raum der Trennwand einnehmen, der somit nicht als tragendes Element zur Verfügung steht.

Die DE 10 2014 225 250 A1 beschreibt einen Flugbegleitersitz der in seiner Parkposition nicht über die Tragwand, in die er eingebettet ist, hinaussteht. Zur strukturellen Unterstützung und unterstützenden Kraftableitung von bei Verwendung des Flugbegleitersitzes auf diesen einwirkenden Kräften an die tragende Flugzeugstruktur kann die Trägereinrichtung eine Verstärkungsstruktur umfassen. Diese Verstärkungsstruktur erstreckt sich bevorzugt in einen von einer der ersten Oberfläche der Trägereinrichtung gegenüberliegenden zweiten Oberfläche der Trägereinrichtung und der Rückseite sowie dem Untersitzbereich der Passagiersitzreihe begrenzten Raum. Somit ist der Sitz nicht in ein Leichtbauteil als solches integrierbar.

Dokument EP3156331 offenbart einen Sitz für Besatzungsmitglieder, installiert an einer Toilettenraumtür.

### DARSTELLUNG DER ERFINDUNG

Ausgehend von diesem Stand der Technik liegt der Erfindung die Aufgabe zugrunde, ein vertikal aufzustellendes Leichtbauteil für eine auskragende Lastaufnahme anzugeben, bei der die einzuleitenden Kräfte ausschliesslich von dem Leichtbauteil als Wand übernommen werden, so dass das Leichtbauteil ohne spezielle Bedingungen überall als Querwand in einem Flugzeug einsetzbar, da das aus der dem Leichtbauteil überstehende Bauteil, wie ein Flugbegleitersitz als auskragende Lastaufnahme, sich ausschliesslich auf die lastaufnehmende Funktion der Querwand abstützt.

Ein vertikal aufzustellendes Leichtbauteil für ein Flugzeug verfügt über mindestens eine auskragende Lastaufnahme, wobei das Leichtbauteil einen Stützstoff, mindestens eine vertikale Verstärkungsstruktur und mindestens eine horizontale Verstärkungsstruktur aufweist. Dabei ist die auskragende Lastaufnahme am Kreuzungspunkt einer der vertikalen Verstärkungsstrukturen mit einer der horizontalen Verstärkungsstrukturen an Stelle des mittigen Stützstoffes vorgesehen. Diese Lastaufnahme umfasst ein aus dem Leichtbauteil überstehendes Kernlaminat, das aus zwei Vorderseitenlaminaten besteht, die aus der Ebene des Stützstoffes von zwei gegenüberliegenden Seiten, beispielsweise rechtwinklig, in das Kernlaminat umgelenkt sind, und die Dicke des durch die Lastaufnahme ersetzten Stützstoffes besteht auf beiden Seiten des Kernlaminates aus den jeweiligen Vorderseitenlaminaten und mit diesen verbundenen Rückseitenlaminaten, die zusammen als den Stützstoff ersetzende Kernlaminate verbunden sind.

Ein solches Leichtbauteil kann für die Herstellung der auskragenden Lastaufnahme ein zentrales Formteil aufweisen, das im Querschnitt eine glatte Bodenfläche vor dem Rückseitenlaminat aufweist und das auf der der Bodenfläche gegenüberliegenden Seite zwei konkave Kurvenformen hat, die an den beiden freien Enden der Bodenfläche von einer auslaufenden Spitze anfangen und sich dann zu einer, beispielsweise rechtwinklig, zur Bodenfläche ausgerichteten Spitze krümmen, so dass die Fasern der Vorderseitenlaminate eine gleichmässige Krümmung erfahren. Im Querschnitt hat sowohl die auskragende Lastaufnahme als auch das Formteil eine T-Form. Es ist somit möglich, das Formteil seitlich aus der Lastaufnahme zu entfernen und den Hohlraum ggf. mit einem Füllstoff zu füllen, insbesondere einem Harz.

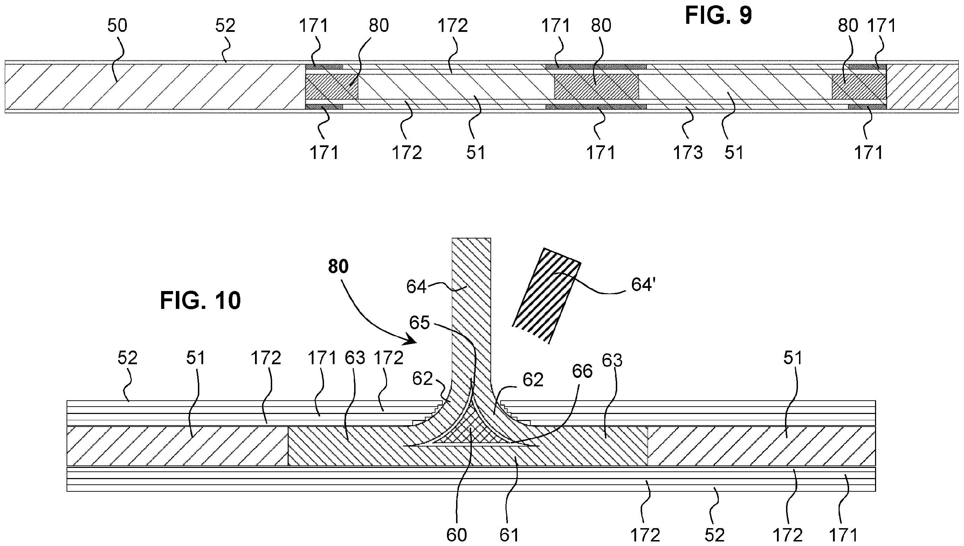

Gemäss den beiden oben erläuterten besonderen Ausführungsformen kann die auskragende Lastaufnahme einen rechten Winkel mit der Ebene des Leichtbauteils bilden, wie es auch in Fig. 10 dargestellt ist. Es ist aber möglich, dass von dem parallel zum Leichtbauteil verlaufenden Rückseitenlaminat die Vorderseitenlaminate eben nicht bezüglich einer Senkrechten auf das Leichtbauteil symmetrisch ist sondern die zwei konkaven Kurvenformen unterschiedlich lang sind, so dass die Richtung der Vorderseitenlaminate zwar eine gleichmässige Krümmung erfahren, diese aber unterschiedlich weit ausgestaltet ist.

Die in dem Leichtbauteil verankerte und den Stützstoff ersetzende auskragende Lastaufnahme ist kreuzweise von einer Abfolge von Schichten der vertikalen Verstärkungsstruktur und der horizontalen Verstärkungsstruktur abgedeckt. Dies ermöglicht eine bessere Krafteinleitung in das Leichtbauteil. Dies kann noch dadurch verbessert werden, dass Laminatschichten von Verstärkungsfasern als Geweben, unidirektionalen Gelegen oder multiaxialen unidirektionalen Gelegen, beispielsweise Pre-Preg-Schichten, aber auch trockene Gelege, die in einem Vakuum unterstützten Produktionsverfahren mit der Harzmasse versetzt werden, die die Sekundärstruktur, also die verbleibenden Flächen des Leichtbauteils ausmachen, beispielsweise im +/-45 Grad Winkel ausgerichtet sind, während die vertikalen Verstärkungsstrukturen und horizontalen Verstärkungsstrukturen eine 0 Grad und 90 Grad Faserausrichtung der Verstärkungsfasern haben. Dabei ist die Ausrichtung der vertikalen Verstärkungsstrukturen und horizontalen Verstärkungsstrukturen mit einer 0 Grad und 90 Grad Angabe der Faserausrichtung eine bevorzugte, die eine Mehrzahl der Fasern aber nicht unbedingt alle umfasst. Damit kann die Krafteinleitung über diese Verstärkungen hinaus auch in die dazwischen liegenden Bereiche gleichmässiger ausgedehnt werden.

Zwei in einer horizontalen Verstärkungsstruktur vorgesehene auskragende Lastaufnahmen können jeweils einen Halteabschnitt für eine Sitzbefestigung aufweisen, so dass eine Sitzfläche zwischen diesen befestigbar ist.

Zwei in einer vertikalen Verstärkungsstruktur vorgesehene auskragende Lastaufnahmen können jeweils einen Halteabschnitt für eine Sicherheitsgurtbefestigung aufweisen.

Werden diese Ausführungen zusammengenommen, baut man ein Leichtbauteil, bei dem mindestens zwei vertikale Verstärkungsstrukturen und zwei horizontale Verstärkungsstrukturen vorgesehen sind, wobei an deren oberen Kreuzungspunkten jeweils ein oberer Halteabschnitt mit einer Sicherheitsgurtbefestigung mit Rollenkörpern für jeweils einen Schultergurt vorgesehen ist, wobei an deren unteren Kreuzungspunkten jeweils ein unterer Halteabschnitt mit einer Sitzbefestigung und einer kombinierten unteren Sicherheitsgurtbefestigung vorgesehen ist.

Das erlaubt in einer weiteren Ausgestaltung ein Leichtbauteil für einen Sitz zu gestalten, der um eine horizontale Achse aus einer gegen das Leichtbauteil lehnenden Position in eine horizontale Sitzposition verschwenkbar ist, und der einen aus zwei Schultergurten bestehenden Sicherheitsgurt aufweist.

Das Leichtbauteil als Wand kann mit den auskragenden Halteabschnitte sehr vorteilhaft mit der Vakuumtechnik VAP (für vaccuum assisted process) hergestellt werden, da dann eine Folie das Leichtbauteil mit diesen Halteabschnitte vollkommen umhüllt und während die Luft dieser Hülle abgesaugt wird, Harz einfliesst und alle Hohlräume ausfüllt und dabei die einzelnen Laminatschichten erzeugt und mit dem Stützstoff verbindet. Dabei können diese Verstärkungsmatten oder Verstärkungsgurte auf dem Stützstoff und das Einbauteil trocken vorgesehen sein und erst anschliessend vollständig mit dem Harz umflossen werden, oder es können ganz oder teilweise Prepregs vorgesehen sein.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind, wobei die Zeichnungen folgende Abbildungen umfassen:
- Fig. 1: zeigt eine schematische perspektivische Ansicht eines vertikal aufzustellenden Leichtbauteiles für eine auskragende Lastaufnahme am Ausführungsbeispiel für einen zweifachen Flugbegleitersitz entgegen der Flugrichtung mit den Sitzen in der Parkposition;
- Fig. 2: zeigt eine Seitenansicht des Leichtbauteils nach Fig. 1;
- Fig. 3: zeigt eine Vorderansicht des Leichtbauteils nach Fig. 1, also in der Ausführungsform entgegen der Flugrichtung für eine auf der rechten Seite des Flugzeugs angebrachte Trennwand als Leichtbauteil mit in Flugrichtung ausgerichteten Flugbegleitersitzen;
- Fig. 4: zeigt eine Vorderansicht des Leichtbauteils nach Fig. 3, wobei die beiden Sitze ausgeklappt sind;
- Fig. 5: zeigt eine Draufsicht auf das Leichtbauteil nach Fig. 4 mit den ausgeklappten Sitzflächen,
- Fig. 6: zeigt eine der Fig. 2 entsprechende Seitenansicht des Leichtbauteils nach Fig. 1 mit eben ausgeklappten Sitzen;
- Fig. 7: zeigt eine vergrösserte Detailansicht der Sitzbefestigung gemäss einer Ausführung nach der Fig. 1 vor dem Leichtbauteil;
- Fig. 8: zeigt eine schematische perspektivische Ansicht des vertikal aufzustellenden Leichtbauteiles für eine auskragende Lastaufnahme am Ausführungsbeispiel für einen zweifachen Flugbegleitersitz mit den Sitzen in der ausgeklappten Position mit Verstärkungselementen;
- Fig. 9: zeigt eine Querschnittsansicht entlang der Linie IX - IX der Fig. 8;
- Fig. 10: zeigt ein lasteinleitendes Element aus der Fig. 9;
- Fig. 11: zeigt eine vergrösserte Draufsicht auf die obere Befestigung eines Sicherheitsgurtes als auskragendes Element;
- Fig. 12: zeigt eine Seitenansicht auf die obere Befestigung eines Sicherheitsgurtes nach Fig. 11;
- Fig. 13: zeigt eine perspektivische Ansicht des Ausführungsbeispiels nach Fig. 1 mit zwei Personen (vor dem Anschnallen; und
- Fig. 14: zeigt eine perspektivische Ansicht der Fig. 13 mit ausgelösten Airbags.

### BESCHREIBUNG BEVORZUGTER AUSFÜHRUNGSFORMEN

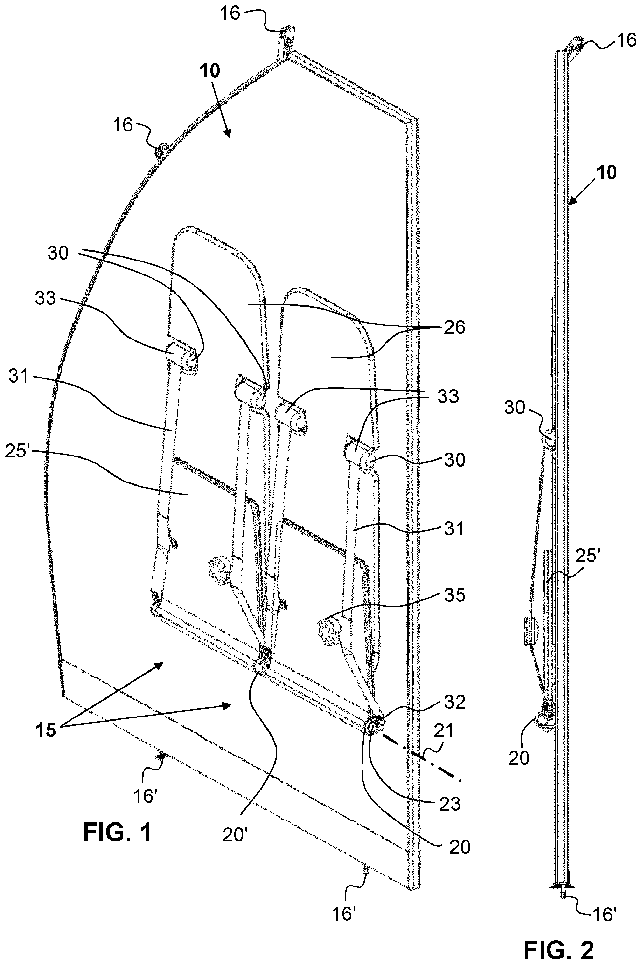

Die Fig. 1 zeigt eine schematische perspektivische Ansicht entgegen der Flugrichtung, also Richtung Heck eines Flugzeuges, eines vertikal aufzustellenden Leichtbauteiles 10 für eine auskragende Lastaufnahme 80 am Ausführungsbeispiel für einen zweifachen Flugbegleitersitz 15, die dann in Flugrichtung sitzen, mit den Sitzen in der Parkposition, d.h. die Sitzfläche 25' ist jeweils hochgeklappt. Die auskragende Lastaufnahme 80 wird allgemein im Zusammenhang mit den Fig. 9 und 10 beschrieben. Hier ist wesentlich, dass das Leichtbauteil 10 als Tragwand eine dünne flächige Struktur darstellt, an der Elemente befestigt werden können, die auskragend sind, also aus der Fläche der Struktur überstehen. Das ist im vorliegenden Fall ein Flugbegleitersitz, kann aber auch jede andere Struktur sein, bei der horizontale und vertikale Kräfte auf das Element 80 einwirken können und über die Befestigungspunkte 16 und 16' des Leichtbauteils 10 in die Flugzeugstruktur bzw. den Boden abgeleitet werden müssen. Dabei sind hier jeweils zwei obere 16 und zwei untere 16' Befestigungspunkte vorgegeben. Es wären auch drei oder mehr möglich.

In dem hier vorliegenden Ausführungsbeispiel kommen die Elemente 80 an den vier Sicherheitsgurtbefestigungen 30 und an den drei Sitzscharnierkörpern 20 zum Einsatz, wobei der mittlere Sitzscharnierkörper 20 für beide Sitze links und rechts eingesetzt wird. Darüber hinaus sind die Sitzscharnierkörper 20 auch die Anknüpfungspunkte für die unteren Befestigungen der Sicherheitsgurte. Gemeinsam ist den Sicherheitsgurtbefestigungen 30 und den Sitzscharnierkörpern 20, dass sie als funktionale Körper über das Leichtbauteil hinausstehen.

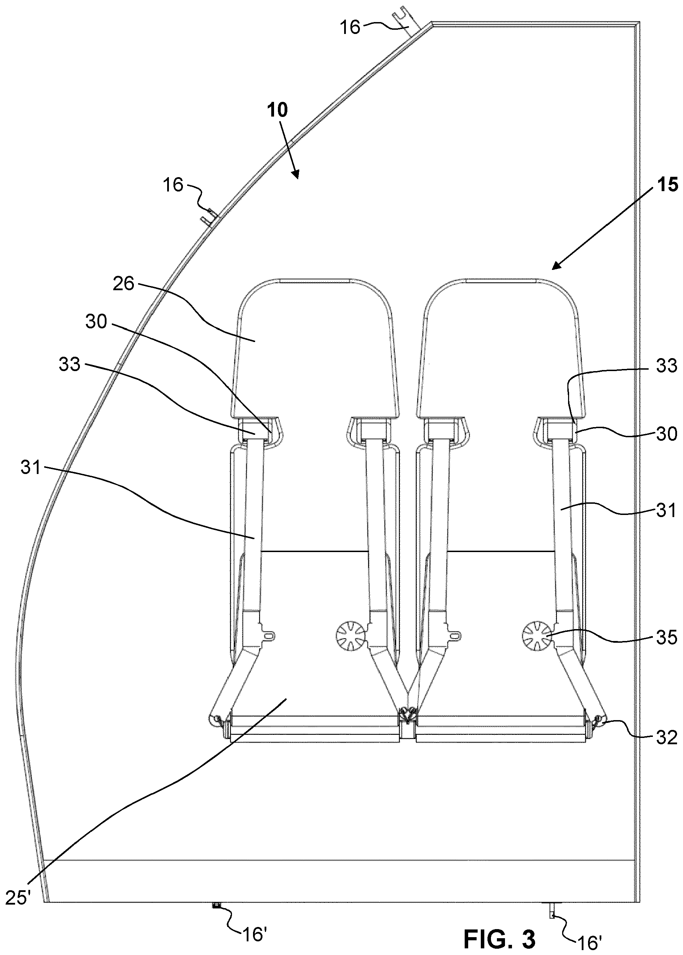

Die Erfindung wird weiter im Zusammenhang mit der Fig. 2 beschrieben, die eine Seitenansicht des Leichtbauteils 10 nach Fig. 1 zeigt. Dazu zeigt Fig. 3 eine Vorderansicht des Leichtbauteils 10 nach Fig. 1, also in der Ausführungsform entgegen der Flugrichtung für eine auf der rechten Seite des Flugzeugs angebrachte Trennwand als Leichtbauteil 10. Die Elemente 80 sind in Fig. 10 schematisch dargestellt. Die auskragenden Kernlaminate 64 sind dort im Querschnitt gezeichnet und weisen einen plattenförmigen Teil auf, der oberhalb und unterhalb der Zeichenebene liegt.

In einer anderen Ausführung ist es möglich, dass von dem parallel zum Leichtbauteil verlaufenden Rückseitenlaminat 61 die Vorderseitenlaminate 62 eben nicht bezüglich einer Senkrechten auf das Leichtbauteil 10 symmetrisch abstehen, sondern die zwei konkaven Kurvenformen unterschiedlich lang sind, so dass die Richtung der Vorderseitenlaminate 62 zwar eine gleichmässige Krümmung erfahren, diese aber unterschiedlich weit ausgestaltet ist, so dass sich eine nicht rechtwinkligauf dem Leichtbauteil stehende Kernlaminatplatte 64' ergibt, die in der Fig. 10 mit ihrem freien Ende dargestellt ist. Die Spitze 65 des Formteils würde dann mittig zu der Kernlaminatplatte 64' zeigen.

Eine mögliche Realisierung der Form dieser Kernlaminate 64 ist im Zusammenhang mit dem Sitzscharnierkörper 20, dass diese Kernlaminatplatte 64 gelocht ist und dass in diesem Loch in der in der Kernlaminatplatte 64 das Achslager 23 des Sitzes 15 eingesetzt wird. Die Sitzscharnierkörper 20 sind dann links und rechts aussen, während sie in der Mitte einen Doppel-Sitzscharnierkörper 20' bilden, in den links bzw. rechts die jeweiligen Lager des Sitzes eingesetzt sind. Entsprechend kann die Sicherheitsgurtbefestigung 30 dergestalt vorgesehen sein, dass diese Platte des Kernlaminates 64 in der Fig. 1 nur jeweils rechts vorgesehen ist, an der dann der Sicherheitsgurtkasten 33 befestigt ist.

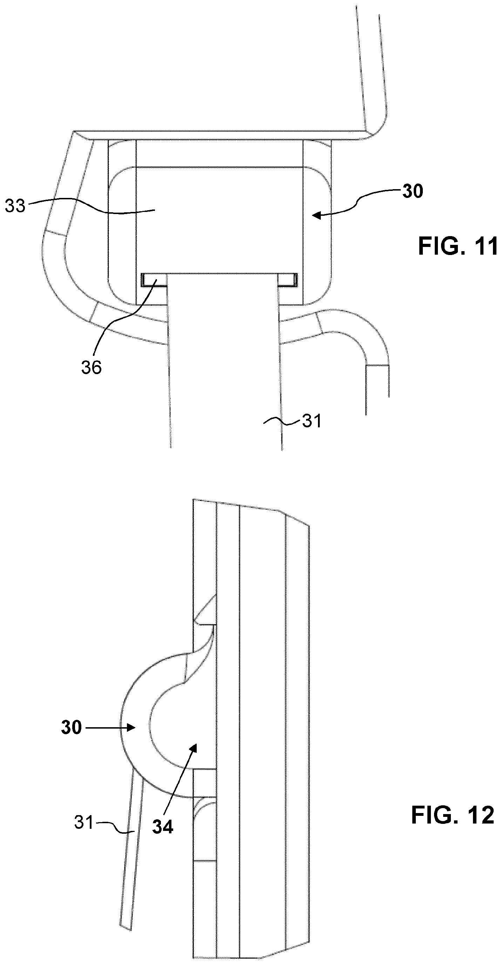

An die Sicherheitsgurtbefestigung 30 ist dann ein teilweise hohler Körper als Sicherheitsgurtkasten 33 (siehe auch Fig. 11) angeflanscht, in dem der Sicherheitsgurt 31 teilweise aufrollbar ist. Es handelt sich bei den Sicherheitsgurten 31 um Schultergurte, die im unteren Bereich mit einer Gurtschnalle 35 vor dem Bauch des Benutzers geschlossen werden. Sie verlaufen dann weiter zu einer unteren Sicherheitsgurtbefestigung 32 am Sitzscharnierkörper 20, welche über eine Befestigungslasche vermittelt wird, die hier schematisch und als Platzhalter als ein Ring 37 dargestellt ist. Die untere Sicherheitsgurtbefestigung 32 kann eine in den Halteabschnitt 24 eingesetzte Schraube umfassen. Mit dem Halteabschnitt 24 ist die spezielle Ausgestaltung der Kernlaminatplatte 64 für die untere Gurtbefestigung 20 bezeichnet. Genauso ist mit dem Halteabschnitt 34 die spezielle Ausgestaltung der Kernlaminatplatte 64 für die obere Sicherheitsgurtbefestigung 30 bezeichnet. "Kernlaminatplatte 64" ist der verschiedenen Ausführungsformen gemeinsame Oberbegriff, welche alle den Vorteil haben, dass die Merkmale seiner Ausgestaltung vor der Herstellung des Leichtbauteils 10 vorgesehen sein können, e.g. die Schraubenlöcher für die untere Gurtbefestigung, die Schraubenlöcher für den Sicherheitsgurtkasten 33 und die Aufnahmeöffnungen für die Lager der Sitze 15. Insofern ist das Bauteil nach Fig. 11 sehr versatil einbindbar.

Mit dem Bezugszeichen 26 ist eine Rückenplatte bezeichnet bei der es sich um eine dünne schützende und Sitzkomfort vermittelnde Matte handelt, die auf dem Leichtbauwandteil 10 lösbar aufgebracht, insbesondere aufgeschraubt oder anhaftend ist; sie kann auch lösbar aufgeklebt sein. Sie verläuft von der Höhe der Sitzfläche 25, um die Sicherheitsgurtbefestigung 30 als Ausnehmungen herum bis als Kopfstütze.

Schliesslich ist in der Fig. 1 noch die Verschwenkachse 21 für die beiden Sitzflächen 25 aus der Position 25' in die Sitzposition 25 dargestellt, die durch den vorderen Bereich des Haltabschnitts 24 der Sitzscharnierkörper geht, nämlich als mittige Achse durch die Öffnung für das Lager 23 in dem Sitzscharnierkörper 20 bzw. dem Doppel-Sitzscharnierkörper 20'.

Aus der Fig. 3 ist erkennbar, dass in vertikaler Hinsicht, die auskragenden Lastaufnahmen hier Sitzscharnierkörper 20 und Sicherheitsgurtbefestigungen 30 nicht übereinander liegen sondern in der Ansicht von vorne leicht seitlich versetzt sind.

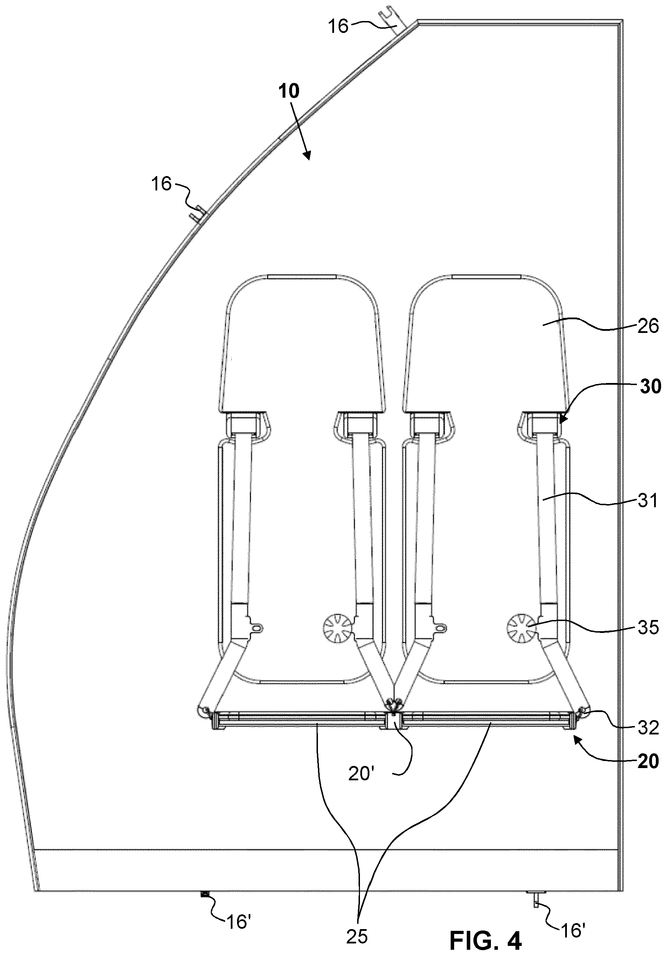

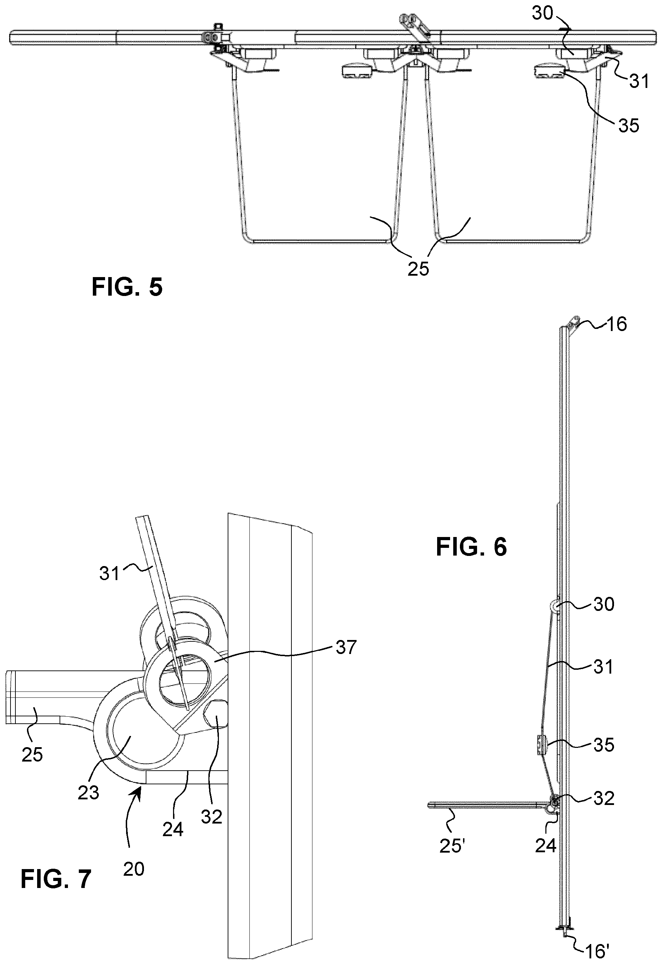

Fig. 4 zeigt dann eine Vorderansicht des Leichtbauteils 10 nach Fig. 3, wobei die beiden Sitze 25 ausgeklappt sind. Die Fig. 5 zeigt dann eine Draufsicht auf das Leichtbauteil 10 nach Fig. 4 mit den ausgeklappten Sitzflächen 25. Fig. 6 zeigt eine der Fig. 2 entsprechende Seitenansicht des Leichtbauteils 10 nach Fig. 1 mit eben ausgeklappten Sitzen 25 und Fig. 7 zeigt eine vergrösserte Detailansicht der Sitzbefestigung 20 gemäss einer Ausführung nach der Fig. 1 räumlich vor dem Leichtbauteil 10.

Über das Leichtbauteil 10 ragt ein Halteabschnitt 24 heraus, der funktional in den Sitzscharnierkörper 20 eingebettet ist oder diesen bildet. An diesem Halteabschnitt 24 sind Elemente des Sitzscharnierkörpers 20 vorgesehen, wie die Sicherheitsgurtbefestigung 32 und 37 nahe an dem Leichtbauteil 10, während ein Achslager 23 konzentrisch um die Achse 21 des Sitzes 15 vorgesehen ist. Die Sitzfläche 25 kann dann zwischen zwei Sitzscharnierkörpern 20 bzw. 20' eingeführt werden und durch entsprechende Achslager 23 gehalten werden. Diese verschwenkbare Befestigung kann auch anders ausgestaltet werden. Es ist lediglich wesentlich, dass sie vor der vorderen Deckfläche des Leichtbauteils 10 vorgesehen ist, aber natürlich aus Platzgründen möglichst dicht vor dieser.

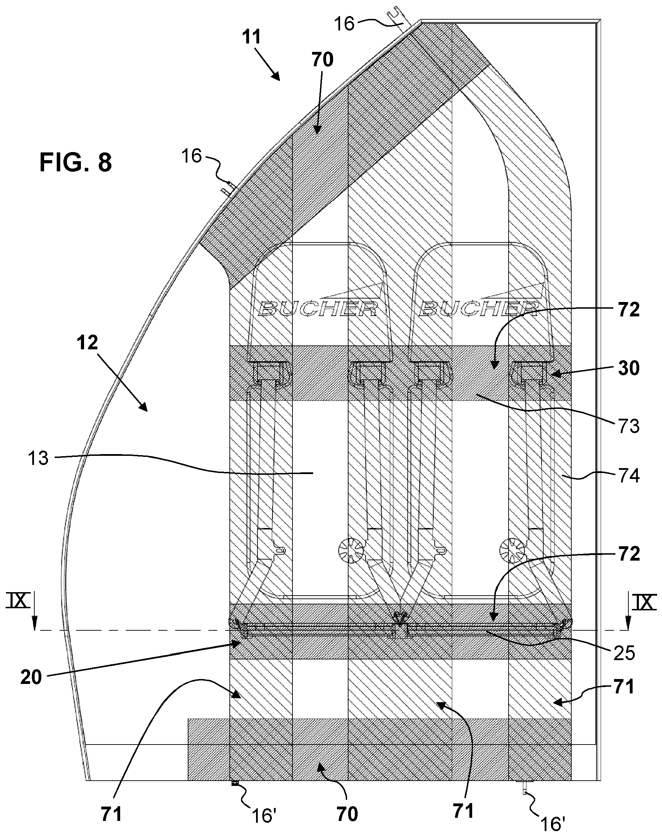

Die Fig. 8 zeigt eine schematische perspektivische Ansicht des vertikal aufzustellenden Leichtbauteiles 10 für eine auskragende Lastaufnahme 80 am Ausführungsbeispiel für einen zweifachen Flugbegleitersitz 15 mit den Sitzflächen 25 in der ausgeklappten Position mit Verstärkungselementen als Trägerstruktur. Die Fig. 9 zeigt eine Querschnittsansicht entlang der Linie IX - IX der Fig. 8 und die Fig. 10 zeigt ein lasteinleitendes Element 80 aus der Fig. 9 in vergrösserter Ansicht.

Die Fig. 8 zeigt dieselben Merkmale wie die Fig. 4. Aus Übersichtlichkeitsgründen ist auf eine Vielzahl der in der Fig. 4 verwendeten Bezugszeichen hier verzichtet worden. Dafür sind hier Teile der Innenstruktur des Leichtbauteils 10 eingezeichnet worden. Jedes Leichtbauteil 10 verfügt über statisch wesentliche Elemente, die als Primärstruktur 11 bezeichnet werden. Diese sind lastenaufnehmend und stehen in funktionalem Zusammenhang mit den lastaufnehmenden auskragenden Elementen 80. Dazu bestehen seitlich von diesen sogenannte Sekundärstrukturen 12, die lediglich den Raum aufnehmen und daher ohne Randbedingungen für eine spezifische Tragfähigkeit möglichst leicht ausgestaltet sind.

Die Primärstruktur 11 betrifft im Bereich der Befestigungspunkte 16 und 16' die Verstärkungsstrukturen 70, bei denen es sich zuerst einmal um zwischen den Befestigungspunkten 16 bzw..16' verlaufende Gurtbänder handelt, wie noch später erläutert wird. Diese werden in vertikaler Richtung zu den Befestigungspunkten 16 hin von drei getrennten vertikalen Verstärkungsstrukturen 71 für die drei unterschiedlichen Seitenbahnen von auskragenden lastaufnehmenden Elementen 80 überlagert. Dazu kommen je Ebene von auskragenden lastaufnehmenden Elementen 80 eine getrennte horizontale Verstärkungsstruktur 72. Dazwischen bleiben in Fachwerk ähnlicher Bauweise wie die Sekundärstrukturen 12 Bereiche 13 bestehen, die keine weitergehende Lasten tragen müssen. Mit anderen Worten, jedes auskragende lastaufnehmende Element 80 ist an einem Kreuzungspunkt von einer vertikalen Verstärkungsstruktur 71 und einer horizontalen Verstärkungsstruktur 72 vorgesehen. Dies betrifft hier die drei Sitzscharnierkörper 20, daher drei vertikale Strukturen 71, wobei von den vier Sicherheitsgurtbefestigungen 30 die beiden mittleren von der mittleren vertikalen Struktur 71 umfasst sind. Demgemäss sind hier zwei horizontale Strukturen 72 vorgesehen, eine für das Sitzflächenniveau und die untere Gurtbefestigung und eine für die obere Gurtbefestigung.

Mit dem Bezugszeichen 50 ist der innere Stützstoff der Sekundärstruktur 12 bezeichnet. Dieser Stützstoff 50 ist auch im Kern in den Bereichen, in denen nur die vertikale 71 oder die horizontale 72 Stützstruktur vorgesehen ist. Da diese Stützstruktur 71 oder 72 ein Volumenteil des Leichtbauteils 10 aufnimmt, ist der dünnere verbleibende Stützstoff mit dem Bezugszeichen 51 versehen. Als Stützstoff können bekannte Wabenstrukturen vorgesehen sein oder der Stützstoff kann auch aus einem Schaum bestehen. Es kann ein Polymethacrylimid Kern sein. Das Leichtbauteil 10 ist für ein gleichmässiges äusseres Bild von einer Deckschicht 52 abgedeckt, insbesondere einer entsprechenden Abschlusslage, wie in EP 3 480 008 A1 der Anmelderin erwähnt, z.B. eine Gewebeschicht, insbesondere eine E-Glass-Schicht.

Das lastaufnehmende Teil 80 ist jeweils beidseitig von mindestens zwei Verstärkungsschichten 171 und 172 abgedeckt. In der Querschnittsansicht der Fig. 9 sind dies in der Zeichenebene durchgehend die horizontalen Verstärkungsschicht(en) 172 und jeweils in jedem der drei Bereiche 71 die einzelnen vertikalen Verstärkungsschicht(en) 171.

Die Schichten 171 und 172 sind als glatt verlaufende Schichten geschichtet mit einem Volumen oder Schicht 173 dazwischen, Prinzipiell wäre es möglich, um das Volumen zu füllen, zwischen letzteren eine Füllschicht 173 vorzusehen. In der Fig. 8 ist dieser Bereich an einer Stelle mit dem Bezugszeichen 73 versehen, um den Unterschied zu den kreuzenden Bereichen 71+72 zu erläutern. Genauso ist dann eine ähnliche Füllschicht (hier unter und oberhalb der Zeichenebene) dann in den Bereichen 74 vorzusehen. Es ist aber bevorzugt, an diesen Stellen der Bereiche 73 und 74, bei einem Schaumstoff eine etwas dickere Lage als Füllstoff 51 zu verwenden, bzw. bei einer mit Deckschichten abgedeckten Wabenplatte, weniger tiefe Ausnehmungen in diesen Deckschichten vorzusehen, wo diese Bereiche 73 und 74 bestehen; d.h., dass der Dickenunterschied durch die die in den Übergangsbereichen nicht vorhandenen Schichten ausgeglichen wird.

Bei den sich kreuzenden Verstärkungsschichten 171 und 172 kann es sich um eine einzelne Struktur handeln. Es kann sich auch um eine abwechselnd schichtweise aufgetragene Abfolge von Strukturen handeln, also vom Kern 80 ausgehend 80 / 172 / 171 / 172 / 171 /172 / 171 / 52, und endend mit der Deckschicht oder Abschlusslage 52. Diese können als Pre-Preg-Strukturen oder Verstärkungslagen vorgesehen sein. Es ist auch möglich, dass dazu Preg-Preg-Strukturen auf einem Stützstoff-Kern 50 / 51 flächig über die gesamte Primär- und Sekundärstruktur vorgesehen sind. Diese können dann +-45 Grad Strukturen sein, während die Kohlenfasern der vertikalen bzw. horizontalen Stützstrukturen 71 und 72 z.B. überwiegend als 0 und 90 Grad Pre-Pregs oder Verstärkungslagerphasen definiert sind. Bei einer entsprechenden Abfolge verstärkt sich noch die Lasteneinleitung und erhöht sich das Potential zur Kraft- und Momentenaufnahme.

Statt jeweils nur eine Schicht 171 oder 172 können diese auch in mehrfachen, bevorzugt sich kreuzenden, Lagen übereinander angeordnet sein, wobei die äussersten Lagen vorteilhafterweise diametral gegenüberliegen, d,h, am weitesten entfernt vom Kern 51, und im Allgemeinen dies die vertikal ausgeführten Unterstüztungsbänder 171 sind, die die Elemente direkt halten.

Das bedeutet, dass die Verstärkungen auf der Rückseite, sofern die Auskragungen 80 nur einseitig sind, wie hier gezeigt, durchgehend sind, während sie auf der Vorderseite entsprechende Öffnungen für die durchgreifenden Abschnitte 24, 34 hat, die in der zusammenfassenden prinzipiellen Darstellung der Fig. 10 das Bezugszeichen 64 haben.Damit ist im Zusammenhang mit der Fig. 9 die Umgebung des lasteinleitenden Teils 80 beschrieben. Dieses selber ist in schematischer Weise in Fig. 10 dargestellt. Es umfasst in einer Ausführung ein Formteil 60, das im Querschnitt eine glatte Bodenfläche aufweist und auf der gegenüberliegenden Seite zwei konkave Kurvenformen, die an den beiden freien Enden der Bodenfläche mit einem kleinen Winkel anfangen und sich dann zu einer rechtwinklig zur Bodenfläche ausgerichteten Spitze krümmen. Mit anderen Worten, die Krümmung geht von 0 Grad zu 90 Grad vorzugsweise in einer gleichförmigen Weise, was im Querschnitt jeweils einem Viertelkreis entspricht. Dabei ist der Radius des Viertelkreises ausreichend gross, dass die Verstärkungsfasern in Pre-Pregs oder in trockenen Matten umgelenkt werden und nicht brechen. Insbesondere kann der Radius grösser sein, als die Hälfte der Dicke des Leichtbauteils 10, so dass die Vorderseitenlaminate 62 erst oberhalb der Abschlusslage 52 endgültig zusammenlaufen. Das Teil könnte man dann als Prisma bezeichnen, denn über die Bauhöhe der auskragenden Lastaufnahme (also senkrecht aus der Zeichenebene der Fig. 10, entspricht es einer Parallelverschiebung der Form aus der Zeichenebene).

Unterhalb der flachen Bodenfläche des Formteils 60 werden Rückseitenlaminate 61 aufgebracht, auf der Vorderseite über beiden konkaven Flächen Vorderseitenlaminate 62. Die Stärke der auskragenden Lastaufnahme 80 ergibt sich durch die Verbindung der Rückseitenlaminate 61 mit den jeweiligen Vorderseitenlaminaten 62 als Kernlaminate 63 in der Tiefe des Bodens des Bauteils 80, während die orthogonal zusammengeführten Vorderseitenlaminate 62 dann auskragende Kernlaminate 64 bilden. Die Dicke der Kernlaminate 63 wird dabei so gewählt, dass sie der Dicke der reduzierten Füllstoffdicke 51 entspricht. Dieses Bauteil 80 ist dann im Herstellungsprozess der Leichtbauwand 10 eingebunden, wird also mit den Verstärkungsschichten 171 und 172 überlaminiert und letztendlich von der Abschlusslage 52 abgedeckt, so dass nur die Kraft- und Momentaufnehmende Position 64, die je nach hier dargestelltem Einsatzgebiet den Halteabschnitt 24 bzw. 34 darstellt, aus der Struktur herausschaut die lasttragende flächige Bolzen 64 aus der Wand herausschaut. Wie oben erwähnt, können dann entsprechende Bohrungen in dem Halteabschnitt 64 eingebracht sein. Bei anderen Ausführungen können anstelle der Sitzpfannenbefestigung und der Schultergurtbefestigung zusätzliche funktionalen Elemente an das Element 64 angeformt werden.

Auf die Elemente wirken unter Belastung hohe Kräfte und Momente, daher ist es wichtig, das Potential von Faser und Harzmatrix optimal zu nutzen und Sollbruchstellen zu vermeiden. Sollbruchstellen im Faserverbund können durch eine zu harte Umlenkung von Fasern oder deren zu starken Drapierung entstehen. Der Vorteil des Formteils 60 innerhalb des Faserverbund-Einzelteils liegt insbesondere darin, dass die Fasern mit einem ausreichend grossen Radius umgelenkt werden und so für einen homogenen Kraftfluss sorgen, während die verschiedenen Laminierungsbahnen 61 und 62 es dem sich ergebenden T-Stück die Einleitung von Kräften und Momenten in die Mitte der Struktur erlauben, bei der diese Verankerung die Optimierung der spannungsführenden Druck- und Zugseiten bedeutet. Der Vorteil dieser Vorgehensweise ist die integrierte Herstellung des Wandbauteils mit der einen oder mehreren auskragenden Lastaufnahmen 80 in einem einzigen durchgehenden Produktionsschritt, so dass die entsprechend geschichteten Verstärkungsfasern gleichmässig zusammen hergestellt worden sind.

Fig. 11 zeigt eine vergrösserte Draufsicht auf die obere Befestigung 30 eines Sicherheitsgurtes 31 als auskragendes Element 80 und Fig. 12 zeigt eine Seitenansicht auf die obere Befestigung 30 eines Sicherheitsgurtes 31 nach Fig. 11. Dabei ist der Schlitz 36 zu erkennen, durch den der Gurt geführt und innerhalb des Sicherheitsgurtkastens 33 aufgerollt wird. Dieser Sicherheitsgurtkasten 33 ist auf der linken Seite an das auskragende Element 30 als Halteabschnitt 34 angeflanscht, z.B. aufgesetzt und angeschraubt. Das Gehäuse 33 kann nur bei einem einfachen Gurt bis auf den Schlitz 36 geschlossen sein. Wenn der Gurt inklusive eines auf diesem integrierten Airbags vorgesehen ist, dann muss dieser Schlitz durch eine grössere Öffnung ersetzt sein,

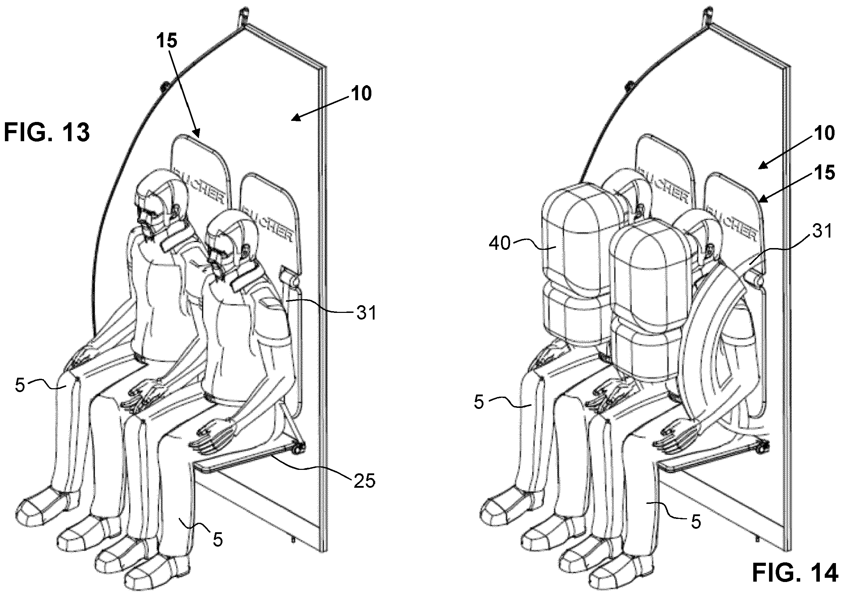

Die Fig. 13 schliesslich zeigt eine perspektivische Ansicht des Ausführungsbeispiels nach Fig. 1 mit zwei Personen 5, bevor sie sich anschnallen, und Fig. 14 zeigt eine perspektivische Ansicht der Fig. 13 mit ausgelösten Airbags 40 vor den angeschnallten Personen 5 auf den Flugbegleitersitzen 15.

**BEZUGSZEICHENLISTE**

| | | | |
|---|---|---|---|
| 5 | Benutzer | | Stützstoff |
| 10 | Leichtbauteil | 52 | Abschlusslage (Deckschicht) |
| 11 | Primärstruktur | 60 | Formteil |
| 12 | Sekundärstruktur | 61 | Rückseitenlaminate |
| 13 | Fachwerkfüllung zwischen Primärstrukturelementen | 62 | Vorderseitenlaminate |
| | | 63 | Kernlaminate |
| 15 | Flugbegleitersitz | 64 | auskragende Kernlaminate |
| 16 | Befestigungspunkt, oben | 64' | nicht rechtwinklig auskragende Kernlaminate |
| 16' | Befestigungspunkt, unten | | |
| 20 | Sitzscharnierkörper | 65 | Spitze (Kante) des Formteils |
| 20' | Doppel-Sitzscharnierkörper | 66 | seitliche Kante des Formteils |
| 21 | (mathematische) Achse des Sitzes | 70 | Verstärkungsstruktur in die Befestigungspunkte |
| 23 | Achslager | 71 | vertikale Gurte aus Verstärkungsfasern / Verstärkungsstruktur |
| 24 | Halteabschnitt | | |
| 25 | Sitzfläche (ausgeklappt) | | |
| 25' | Sitzfläche (hochgeklappt) | 72 | horizontale Gurte aus verstärkungsfasern / Verstärkungsstruktur |
| 26 | Rückenplatte | | |
| 30 | Sicherheitsgurtbefestigung mit Rollenkörper (oben) | | |
| | | 73 | Einzel-Verstärkung horizontal (vorzugsweise realisiert als Teil des Stützstoffes) |
| 31 | Sicherheitsgurt (Schultergurt) | | |
| 32 | Sicherheitsgurtbefestigung (unten) | | |
| | | 74 | Einzel-Verstärkung vertikal |
| 33 | Sicherheitsgurtkasten | 80 | auskragende Lastaufnahme |
| 34 | Halteabschnitt | 171 | vertikale Gurte aus Verstärkungsfasern z.B. Prepregs |
| 35 | Gurtschnalle | | |
| 36 | Durchführungsöffnung (hier als Schlitz dargestellt) | | |
| | | 172 | horizontale Gurte aus Verstärkungsfasern z.B. Prepregs |
| 37 | Befestigungslasche (hier als Ring dargestellt) | | |
| 40 | Airbag | 173 | füllende Prepregs (vorzugsweise realisiert als Teil des Stützstoffes) |
| 50 | Stützstoff | | |
| 51 | Bereich mit dünnerem | | |

## Patentansprüche

1. Vertikal aufzustellendes Leichtbauteil (10) für ein Flugzeug, mit mindestens einer auskragenden Lastaufnahme (80), wobei das Leichtbauteil (10) einen Stützstoff (50, 51), mindestens eine vertikale Verstärkungsstruktur (71) und mindestens eine horizontale Verstärkungsstruktur (72) aufweist, wobei eine auskragende Lastaufnahme (80) am Kreuzungspunkt einer der vertikalen Verstärkungsstrukturen (71) mit einer der horizontalen Verstärkungsstrukturen (72) an Stelle des mittigen Stützstoffes (51) vorgesehen ist, **dadurch gekennzeichnet, dass** die auskragende Lastaufnahme (80) ein aus dem Leichtbauteil (10) überstehendes Kernlaminat (64; 24, 34) umfasst, das aus zwei Vorderseitenlaminaten (62) besteht, die aus der Ebene des Stützstoffes (51) von zwei gegenüberliegenden Seiten in das Kernlaminat (64) umgelenkt sind, und dass die Dicke des durch die auskragende Lastaufnahme (80) ersetzten Stützstoffes (51) auf beiden Seiten des Kernlaminates aus den jeweiligen Vorderseitenlaminaten (62) und mit diesen verbundenen Rückseitenlaminaten (61) besteht, die zusammen als Stützstoff ersetzende Kernlaminate (63) verbunden sind.

2. Leichtbauteil (10) nach Anspruch 1, **dadurch gekennzeichnet, dass** die auskragende Lastaufnahme (80) ein zentrales Formteil (60) aufweist, das im Querschnitt eine glatte Bodenfläche vor dem Rückseitenlaminat (61) aufweist und auf der der Bodenfläche gegenüberliegenden Seite zwei konkave Kurvenformen, die an den beiden freien Enden der Bodenfläche von einer auslaufenden Spitzenkanten (66) anfangen und sich dann zu einer zur Bodenfläche ausgerichteten Spitzenkante (65) krümmen, so dass die Fasern der Vorderseitenlaminate (62) eine gleichmässige Krümmung erfahren.

3. Leichtbauteil (10) nach Anspruch 1 oder 2, **dadurch gekennzeichnet, dass** die in dem Leichtbauteil (10) verankerte und den Stützstoff ersetzende auskragende Lastaufnahme (80) kreuzweise von einer Abfolge von Schichten der vertikalen Verstärkungsstruktur (71) und der horizontalen Verstärkungsstruktur (72) abgedeckt ist.

4. Leichtbauteil (10) nach einem der Ansprüche 1 bis 3, **dadurch gekennzeichnet, dass** die aus der Ebene des Stützstoffes (51) von zwei gegenüberliegenden Seiten in das Kernlaminat (64) rechtwinklig umgelenkt sind und/oder dass das zentrale Formteil (60) an den beiden freien Enden der Bodenfläche von einer auslaufenden Spitzenkante (66) anfängt und sich dann zu einer rechtwinklig zur Bodenfläche ausgerichteten Spitzenkante (65) krümmt.

5. Leichtbauteil (10) nach einem der Ansprüche 1 bis 4, **dadurch gekennzeichnet, dass** zwei in einer horizontalen Verstärkungsstruktur (72) vorgesehene auskragende Lastaufnahmen (80) jeweils einen Halteabschnitt (24) für eine Sitzbefestigung (20) aufweisen, so dass eine Sitzfläche (25, 25') zwischen diesen befestigbar ist.

6. Leichtbauteil (10) nach einem der Ansprüche 1 bis 5, **dadurch gekennzeichnet, dass** zwei in einer vertikalen Verstärkungsstruktur (71) vorgesehene auskragende Lastaufnahmen (80) jeweils einen Halteabschnitt (34) für eine Sicherheitsgurtbefestigung (30) aufweisen.

7. Leichtbauteil (10) nach Anspruch 5 und 6, **dadurch gekennzeichnet, dass** mindestens zwei vertikale Verstärkungsstrukturen (71) und zwei horizontale Verstärkungsstrukturen (72) vorgesehen sind, wobei an deren oberen Kreuzungspunkten jeweils ein oberer Halteabschnitt (34) mit einer Sicherheitsgurtbefestigung (30) mit Rollenkörpern für jeweils einen Schultergurt (31) vorgesehen ist, wobei an deren unteren Kreuzungspunkten jeweils ein unterer Halteabschnitt (24) mit einer Sitzbefestigung (20) und einer kombinierten unteren Sicherheitsgurtbefestigung (32) vorgesehen ist.

8. Leichtbauteil (10) nach Anspruch 7 für einen Sitz (25, 25'), der um eine horizontale Achse (21) aus einer gegen das Leichtbauteil (10) lehnenden Position (25') in eine horizontale Sitzposition (25) verschwenkbar ist, mit einem aus zwei Schultergurten (31) bestehenden Sicherheitsgurt.

## Claims

1. Lightweight component (10) to be set up vertically, for an aircraft, having at least one cantilevered load support (80), said lightweight component (10) comprising a support material (50, 51), at least one vertical reinforcing structure (71) and at least one horizontal reinforcing structure (72), wherein a cantilevered load receptacle (80) is provided at the intersection of one of the vertical reinforcing structures (71) with one of the horizontal reinforcing structures (72) in place of the central support material (51), **characterized in that** the cantilevered load support (80) comprises a core laminate (64; 24, 34) projecting from the lightweight component (10) and consisting of two front side laminates (62) which are deflected out of the plane of the support material (51) from two opposite sides into the core laminate (64), and **in that** the thickness of the support material (51) replaced by the cantilevered load support (80) on both sides of the core laminate consists of the respective front side laminates (62) and rear side laminates (61) connected thereto, which are connected together as support material-replacing core laminates (63).

2. Lightweight component (10) according to claim 1, **characterised in that** the cantilevered load support (80) comprises a central moulding (60) having, in cross-section, a smooth bottom surface in front of the back laminate (61) and, on the side opposite the bottom surface, two concave curved shapes, which start at the two free ends of the bottom surface from an outgoing tip edge (66) and then curve to a tip edge (65) aligned with the bottom surface, so that the fibres of the front side laminates (62) undergo a uniform curvature.

3. Lightweight component (10) according to claim 1 or 2, **characterised in that** the cantilevered load support (80) anchored in the lightweight component (10) and replacing the support material is covered crosswise by a sequence of layers of the vertical reinforcement structure (71) and the horizontal reinforcement structure (72).

4. Lightweight component (10) according to any one of claims 1 to 3, **characterised in that** the out-of-plane support material (51) is deflected into the core laminate (64) at right angles from two opposite sides and/or **in that** the central moulding (60) starts at the two free ends of the bottom surface from a trailing tip edge (66) and then curves to a tip edge (65) aligned at right angles to the bottom surface.

5. Lightweight component (10) according to any one of claims 1 to 4, **characterised in that** two cantilevered load supports (80) provided in a horizontal reinforcing structure (72) each have a retaining portion (24) for a seat attachment (20) so that a seat surface (25, 25') can be attached between them.

6. Lightweight component (10) according to any one of claims 1 to 5, **characterised in that** two cantilevered load supports (80) provided in a vertical reinforcing structure (71) each have a retaining portion (34) for a seat belt attachment (30).

7. Lightweight component (10) according to claim 5 and 6, **characterised in that** at least two vertical reinforcement structures (71) and two horizontal reinforcement structures (72) are provided, wherein an upper retaining section (34) with a safety belt attachment (30) with roller bodies for a shoulder belt (31) in each case is provided at their upper crossing points, wherein a lower retaining section (24) with a seat attachment (20) and a combined lower safety belt attachment (32) is provided at their lower crossing points in each case.

8. Lightweight component (10) according to claim 7 for a seat (25, 25') which is pivotable about a horizontal axis (21) from a position (25') leaning against the lightweight component (10) to a horizontal seating position (25), with a safety belt consisting of two shoulder straps (31).

## Revendications

1. Composant léger à installer verticalement (10) pour un avion ayant au moins un support de charge saillante (80), ledit composant léger (10) comprenant un matériau de support (50, 51), au moins une structure de renforcement verticale (71) et au moins une structure de renforcement horizontale (72), dans lequel un réceptacle de charge saillante (80) est prévu à l'intersection de l'une des structures de renforcement verticales (71) avec l'une des structures de renforcement horizontales (72) à la place du matériau de support central (51), **caractérisé en ce que** le support de charge saillante (80) comprend un noyau stratifié (64 ; 24, 34) faisant saillie à partir de l'élément léger (10) et consistant en deux stratifiés frontaux (62) qui sont déviés hors du plan du matériau de support (51) à partir de deux côtés opposés dans le stratifié central (64), et que l'épaisseur du matériau de support (51) remplacée par le support de charge saillante (80) des deux côtés du stratifié central est constituée des stratifiés frontaux (62) et des stratifiés arrière (61) respectifs qui y sont reliés, lesquels sont reliés ensemble en tant que stratifiés centraux remplaçant le matériau de support (63).

2. Composant léger (10) selon la revendication 1, **caractérisé en ce que** le support de charge saillante (80) comprend une moulure centrale (60) présentant, en coupe transversale, une surface inférieure lisse devant le stratifié arrière (61) et, sur le côté opposé à la surface inférieure, deux formes incurvées concaves, qui commencent aux deux extrémités libres de la surface inférieure à partir d'un bord de pointe sortant (66) et s'incurvent ensuite vers un bord de pointe (65) aligné avec la surface inférieure, de sorte que les fibres des stratifiés latéraux avant (62) subissent une courbure uniforme.

3. Composant léger (10) selon la revendication 1 ou 2, **caractérisé en ce que** le support de charge saillante (80) ancré dans le composant léger (10) et remplaçant le matériau de support est recouvert transversalement par une séquence de couches de la structure de renforcement verticale (71) et de la structure de renforcement horizontale (72).

4. Composant léger (10) selon l'une quelconque des revendications 1 à 3, **caractérisé par le fait que** le matériau de support (51) hors plan est dévié dans le noyau stratifié (64) à angle droit à partir de deux côtés opposés et/ou **par le fait que** le moulage central (60) commence aux deux extrémités libres de la surface inférieure à partir d'un bord de pointe arrière (66) et s'incurve ensuite jusqu'à un bord de pointe (65) aligné à angle droit par rapport à la surface inférieure.

5. Composant léger (10) selon l'une quelconque des revendications 1 à 4, **caractérisé en ce que** deux supports de charge saillantes (80) prévus dans une structure de renforcement horizontale (72) comportent chacun une partie de retenue (24) pour une fixation de siège (20), de sorte qu'une surface de siège (25, 25') peut être fixée entre eux.

6. Composant léger (10) selon l'une quelconque des revendications 1 à 5, **caractérisé par le fait que** deux supports de charge saillantes (80) prévus dans une structure de renforcement verticale (71) comportent chacun une partie de retenue (34) pour une fixation de ceinture de sécurité (30).

7. Composant léger (10) selon les revendications 5 et 6, **caractérisé en ce qu'**au moins deux structures de renforcement verticales (71) et deux structures de renforcement horizontales (72) sont prévues, dans lequel une section de retenue supérieure (34) avec une fixation de ceinture de sécurité (30) avec des corps de rouleaux pour une ceinture d'épaule (31) dans chaque cas est prévue à leurs points de croisement supérieurs, dans lequel une section de retenue inférieure (24) avec une fixation de siège (20) et une fixation de ceinture de sécurité inférieure combinée (32) est prévue à leurs points de croisement inférieurs dans chaque cas.

8. Composant léger (10) selon la revendication 7 pour un siège (25, 25') pivotant autour d'un axe horizontal (21) d'une position (25') adossée au composant léger (10) à une position assise horizontale (25), avec une ceinture de sécurité constituée de deux bretelles (31).
